Europäisches Patentamt

European Patent Office

Office européen des brevets

(11) Veröffentlichungsnummer: **0 311 856**
**A1**

# (12) EUROPÄISCHE PATENTANMELDUNG

(21) Anmeldenummer: 88116190.5

(22) Anmeldetag: 30.09.88

(51) Int. Cl.⁴: **C01G 56/00 , C01G 43/00 , C01F 15/00 , B01J 8/18**

(30) Priorität: **16.10.87 DE 3735144**

(43) Veröffentlichungstag der Anmeldung:
**19.04.89 Patentblatt 89/16**

(84) Benannte Vertragsstaaten:
**DE FR GB**

(71) Anmelder: **ALKEM GMBH**
**Rodenbacher Chaussee 6**
**D-6450 Hanau 11(DE)**

(72) Erfinder: **Druckenbrodt, Wolf-Günther, Dr.**
**Buchenweg 1A**
**D-6458 Rodenbach 1(DE)**
Erfinder: **Wittmann, Kurt, Dr.**
**Vogelsbergstrasse 38**
**D-6455 Erlensee(DE)**
Erfinder: **Lasberg, Ingo, Dipl.-Ing.**
**Kälberauerstrasse 24**
**D-8755 Alzenau(DE)**
Erfinder: **Zoch, Heiner, Dipl.-Ing.**
**Schumacherstrasse 15**
**D-6052 Mühlheim am Main(DE)**

(74) Vertreter: **Mehl, Ernst, Dipl.-Ing. et al**
**Postfach 22 13 17**
**D-8000 München 22(DE)**

(54) **Verfahren zum thermischen Behandeln von festem Schüttgut aus Schwermetallverbindungen, insbesondere von Uran-, Plutonium- und/oder Thoriumverbindungen und Behandlungsgefäss.**

(57) Bei einem kontinuierlich durchführbaren Verfahren zum thermischen Behandeln von festem Schüttgut mit einem Prozeßgas wird als Behandlungsgefäß (16) ein Rohr mit übereinander angeordneten, jeweils ein Überlaufrohr (18) aufweisenden Siebböden (17) verwendet, in das am Oberende das Schüttgut eingefüllt und am Unterende durch einen Zufuhrstutzen (20) das Prozeßgas eingeblasen und aus dem das behandelte Schüttgut durch ein Austragsrohr (32) am Unterende abgezogen wird.

FIG 2

EP 0 311 856 A1

### Verfahren zum thermischen Behandeln von festem Schüttgut aus Schwermetallverbindungen, insbesondere von Uran-, Plutonium-und/oder Thoriumverbindungen und Behandlungsgefäß.

Die Erfindung betrifft ein Verfahren nach dem Oberbegriff des Patentanspruches 1 und ein Behandlungsgefäß nach Patentanspruch 19.

Ein derartiges Verfahren ist bereits üblich. Als Behandlungsgefäß wird ein Wirbelschichtofen verwendet, in dem das Schüttgut mit dem Prozeßgas aufgewirbelt wird. Dieser Wirbelschichtofen muß immer wieder entladen und mit neuem Schüttgut beladen werden und ist deshalb nicht kontinuierlich betreibbar.

Der Erfindung liegt die Aufgabe zugrunde, dieses Verfahren weiterzubilden und seine kontinuierliche Durchführung zu ermöglichen.

Zur Lösung dieser Aufgabe hat das Verfahren der eingangs erwähnten Art erfindungsgemäß die Verfahrensschritte nach dem kennzeichnenden Teil des Patentanspruches 1. Das Behandlungsgefäß ist erfindungsgemäß entsprechend Patentanspruch 19 ausgebildet.

Bei diesem Verfahren kann dem Behandlungsgefäß sowohl festes Schüttgut als auch Prozeßgas kontinuierlich zugeführt werden. Ebenso kontinuierlich kann auch behandeltes Schüttgut aus dem Behandlungsgefäß abgezogen werden. Das im Schüttgut gebundene Schwermetall kann insbesondere durch thermische Neutronen spaltbarer Kernbrennstoff wie Uran, Plutonium oder Thorium sein, und durch eine schlanke Ausführung des Behandlungsgefäßes wird eine kritische Anordnung vermieden.

Vorteilhafte Weiterbildungen des erfindungsgemäßen Verfahrens sind Gegenstand der Patentansprüche 2 bis 18, vorteilhafte Weiterbildungen des Behandlungsgefäßes Gegenstand der Patentansprüche 20 und 21.

Ein Rohr mit übereinander angeordneten und jeweils ein Überlaufrohr aufweisenden Siebböden als Behandlungsgefäß ist zwar schon bekannt. Es wird jedoch entweder zur Rektifikation von Flüssigkeiten, zum Beispiel Erdöl, die bei verschiedenen Temperaturen siedende Fraktionen enthalten, oder entsprechend der deutschen Patentschrift 31 47 435 zum Ausfällen von Ammoniumuranylplutonylcarbonat aus einer flüssigen salpetersauren Uranylputonylnitratlösung und einer flüssigen Ammoniumcarbonatlösung oder entsprechend der deutschen Offenlegungsschrift 31 47 199 zum Auflösen von schwerlöslichen Feststoffen wie UO$_2$ oder PuO$_2$ in einer Lösungsflüssigkeit wie Salpetersäure verwendet.

Aus der US-Patentschrift 2 707 701 ist es bekannt, zum Cracken von gasförmigen Kohlenwasserstoffen im Gegenstrom Katalysatorpartikel aus Bentoniterde oder synthetischen Gelen, die Kieselerde und Tonerde oder Kieselerde und Talkerde enthalten, durch ein innen mit Siebböden und zugeordneten Überlaufrohren versehenes Behandlungsgefäß zu führen. Zum Regenerieren werden die Artikel im Gegenstrom zu einem Regeneriergas durch ein (ähnlich wie das Behandlungsgefäß ausgebildetes) Regeneriergefäß geleitet.

Die Erfindung und ihre Vorteile seien anhand der Zeichnung an einem Ausführungsbeispiel näher erläutert:

FIG 1 zeigt schematisch eine Anlage zum Erzeugen von Uranoxid bzw. Uran-Plutonium-Mischoxid aus Uranylnitrat bzw. aus Uranylplutonylnitrat oder Uranhexafluorid.

FIG 2 zeigt schematisch im Längsschnitt ein Behandlungsgefäß für die Anlage nach FIG 1.

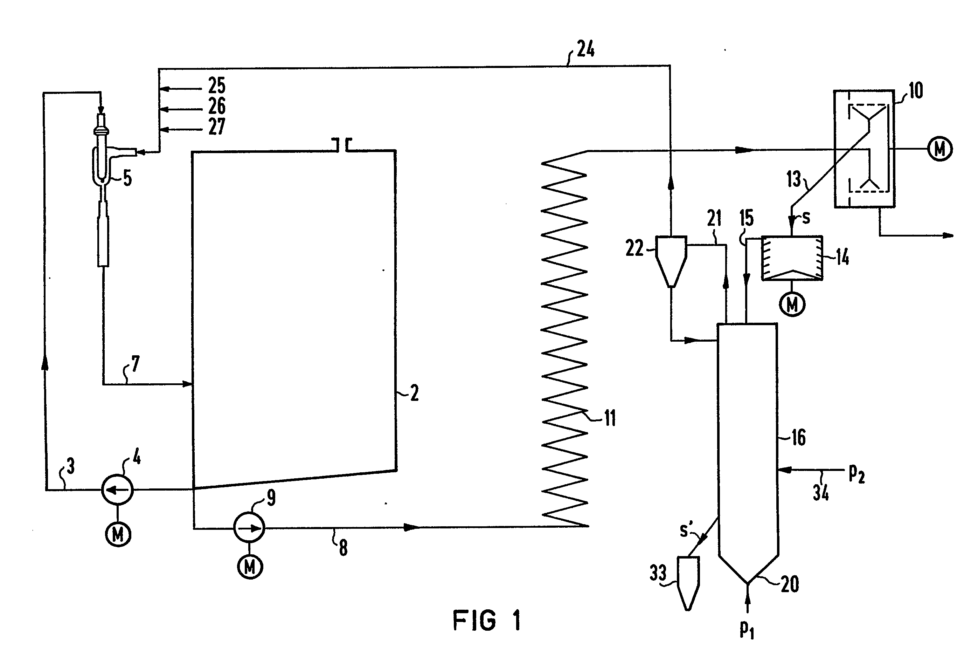

Die Anlage nach FIG 1 hat ein Reaktionsgefäß 2. Am Boden dieses Reaktionsgefäßes 2 ist eine Rohrleitung 3 mit einer Pumpe 4 angeschlossen. Diese Rohrleitung 3 führt zu einer Strahlpumpe 5, die ausgangsseitig über eine Rohrleitung 7 wieder am Reaktionsgefäß 2 angeschlossen ist.

Eine weitere Rohrleitung 8 mit einer Pumpe 9 führt ebenfalls vom Boden des Reaktionsgefäßes 2 zu einer Zentrifuge 10. Diese Rohrleitung 8 steigt vom Boden des Reaktionsgefäßes 2 zur niveaumäßig höher angeordneten Zentrifuge 10 in einem Steigleitungsteil 11 wendelförmig auf.

Die Zentrifuge 10 kann eine Schälzentrifuge sein mit einem Austragsrohr 13, das zu einem Vibrationsdosierer 14 führt. Diesem Vibrationsdosierer 14 ist ein Einförderstutzen 15 nachgeschaltet, der zwecks Zufuhr eines festen Schüttguts s in ein Behandlungsgefäß 16 führt.

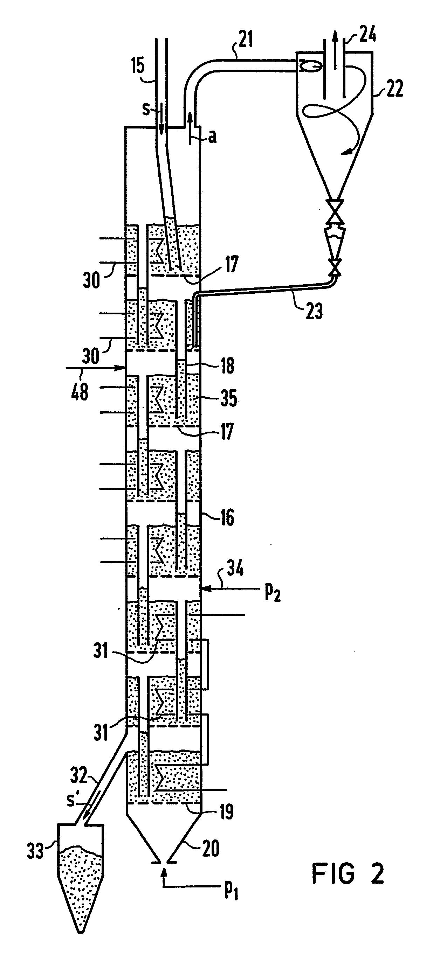

Das Behandlungsgefäß 16 nach FIG 2 ist ein mit vertikaler Längsachse angeordnetes schlankes Rohr aus Stahl, in dem übereinander eine Reihe von mit Löchern versehenen Siebböden 17 ebenfalls aus Stahl angeordnet sind. Diese Siebböden 17 sind quer zur Längsachse des Rohres angeordnet. Jeder Siebboden 17 hat ein an beiden Enden offenes Überlaufrohr 18, das parallel zur Längsachse des das Behandlungsgefäß 16 bildenden Rohres ausgerichtet ist und das zum unterhalb des jeweiligen Siebbodens 17 angeordneten Siebboden 17 bzw. zu einer Fritte 19 aus Sintermetall am Unterende des Rohres 16 führt. An diesem Unterende hat das Rohr 16 auch einen Zufuhrstutzen 20 für ein erstes Prozeßgas p1. Am Oberende hat das das Behandlungsgefäß 16 bildende Rohr einen Austrittsstutzen 21 für Abgas a mit einem Zyklonabscheider 22, dessen Staubaustragsrohr 23 an einem Anschluß seitlich in das das Behandlungsgefäß 16 bildende Rohr an dessen Oberende geführt ist.

Vom Zyklonabscheider 22 führt eine Rohrleitung 24 zu einem Sauganschluß der Strahlpumpe 5, in den noch drei weitere Rohrleitungen 25, 26 und 27 münden.

In dem das Behandlungsgefäß 16 bildenden Rohr sind jeweils auf der Oberseite der Siebböden 17, die sich am Oberende des Rohres befinden, elektrische Heizvorrichtungen 30 angeordnet. Demgegenüber sind an der Oberseite der Siebböden 17 und der Fritte 19, die sich am Unterende des das Behandlungsgefäß 16 bildenden Rohres befinden, aus Kühlschlangen bestehende Kühlvorrichtungen 31 angeordnet. Diese sind als Kühlschlangen ausgebildet, sind in Serie geschaltet und werden von Kühlwasser durchflossen.

Seitlich mündet in das das Behandlungsgefäß 16 bildende Rohr ein weiterer Zufuhrstutzen 34, der für ein zweites Prozeßgas p2 vorgesehen ist. Er hat von beiden Enden dieses Rohres und insbesondere vom Zufuhrstutzen 20 Abstand. Dieser Abstand ist vom Oberende des Rohres größer als vom Unterende. Er liegt unterhalb der untersten Heizvorrichtung 30.

Am Unterende des das Behandlungsgefäß 16 bildenden Rohres ist noch ein Austragsrohr 32 zum Austragen von behandeltem Schüttgut s' angebracht, das über der Oberseite der Fritte 19 abgeht und zu einem Sammelbehälter 33 führt.

In das Reaktionsgefäß 2 wird zunächst durch die Rohrleitungen 27 und 7 Wasser eingefüllt, bis mit der Pumpe 4 ein Wasserkreislauf durch die Rohrleitungen 3 und 7 und durch das Reaktionsgefäß 2 in Gang gesetzt werden kann. Sodann werden die Rohrleitung 25 mit $CO_2$, die Rohrleitung 26 mit $NH_3$ und die Rohrleitung 27 mit einer wässrigen Lösung einer Schwermetallverbindung, z.B. von Uranylplutonylnitrat, beaufschlagt und alle drei Stoffe von der Strahlpumpe 5 über die Rohrleitung 7 in das Reaktionsgefäß 2 transportiert. In diesem Reaktionsgefäß 2 bildet sich eine Suspension von Ammoniumuranylplutonylkarbonat. Nach Ablauf einer Füllzeit, während der sich das Reaktionsgefäß 2 mit dieser Suspension füllt, wird die Zufuhr von Uranylplutonylnitrat durch die Rohrleitung 27 unterbrochen und die Pumpe 9 solange in Betrieb gesetzt, bis etwa 10 % der im Reaktionsgefäß 2 befindlichen Suspensionsmenge durch die Rohrleitung 8 in die Zentrifuge 10 gepumpt worden ist. Hierauf wird die Pumpe 9 ausgeschaltet, und der wendelförmig aufsteigende Steigleitungsteil 11 der Rohrleitung 8 verhindert ein Zusedimentieren der Rohrleitung 8.

Während durch die Rohrleitung 27 wieder wässrige Lösung von Uranylplutonylnitrat zugeführt und im Reaktionsgefäß 2 weiteres Ammoniumuranylplutonylcarbonat gebildet wird, gelangt das in der Zentrifuge 10 abgetrennte Ammoniumuranylplutonylkarbonat in Pulverform als festes Schüttgut s über die Austragsleitung 13, den Vibrationsdosierer 14 und den Einförderstutzen 15 in das Behandlungsgefäß 16.

In dieses Behandlungsgefäß 16 strömt durch den Zufuhrstutzen 20 am Unterende als erstes Prozeßgas p1 ein Gemisch aus Stickstoff und Sauerstoff, z.B. Luft, und durch den Zufuhrstutzen 34 als weiteres Prozeßgas p2 ein Gemisch aus Wasserstoff und Stickstoff. Dadurch wird auf den Oberseiten der Siebböden 17 und der Fritte 19 jeweils eine Wirbelschicht 35 aus dem festen Schüttgut s gebildet. Das durch den Eintragsstutzen 15 in das Behandlungsgefäß 16 gelangte, zunächst noch aus Ammoniumuranylplutonylkarbonat bestehende feste Schüttgut s wandert durch die Überlaufrohre 18 nacheinander von Siebboden 17 zu Siebboden 17 und wird dabei durch die elektrischen Heizvorrichtungen 30 in den Wirbelschichten 35 auf der Oberseite der Siebböden 35 am Oberende des Behandlungsgefäßes 16 erhitzt. Dabei zersetzt sich das Ammoniumuranylplutonylkarbonat thermisch unter Bildung des genannten Abgases a, das aus $NH_3$, $CO_2$ und Wasserdampf besteht. Dieses Abgas a wird durch den Abgasstutzen 21 über den Zyklonabscheider 22 und die Rohrleitung 24 zur Strahlpumpe 5 zurückgeleitet.

Zugleich werden im Behandlungsgefäß 16 das im Schüttgut s enthaltene Uran und Plutonium durch den Wasserstoff, der durch den Zufuhrstutzen 34 als Prozeßgas p2 zugeführt wird, aus dem sechswertigen in den vierwertigen Oxidationszustand reduziert. Beim Durchlaufen der mit den Kühlvorrichtungen 31 gekühlten Wirbelschichten 35 an der Oberseite der Siebböden 17 am Unterende des Behandlungsgefäßes 16 wird das feste Schüttgut s leicht anoxidiert, so daß schließlich als behandeltes Schüttgut s' Schüttgut aus Uran-Plutonium-Mischoxid mit einem genau eingestellten Sauerstoff-Metall-Verhältnis durch das Austragsrohr 32 in den Sammelbehälter 33 gelangt.

Zum Beseitigen von störendem Fluorid aus dem Schüttgut s kann am das Behandlungsgefäß 16 bildenden Rohr noch ein weiterer, Zufuhrstutzen 48 vorgesehen sein, der ebenfalls seitlich in das Rohr mündet, dessen Abstand vom Unterende des Rohres aber größer ist als vom Oberende und durch den Wasserdampf in das Rohr geblasen wird.

Die Auswirkungen des Taktens beim Abziehen von Ammoniumuranylplutonylkarbonat aus dem Reaktionsgefäß 2 und des Abscheidens in der Zentrifuge 10 wird durch den Vibrationsdosierer 14 kompensiert, der zugleich einen Speicher für das in der Zentrifuge 10 abgetrennte Ammoniumuranylplutonylkarbonat darstellt. Er sorgt für eine kontinuierliche Zufuhr dieses Stoffes in Form des pulverförmigen festen Schüttguts s zum Behandlungsgefäß 16, so daß diesem Behandlungsgefäß 16 auch kontinuierlich Uran-Plutonium-Mischoxid in Pulverform entnommen werden kann. Dieses Uran-Plutonium-Mischoxid hat stets gleichbleibende Qualität, da bei jedem Takt nur verhältnismäßig wenig Ammoniumuranylplutonylkarbonat aus dem Reaktionsgefäß 2 abgezogen zu werden braucht. Daher findet durch dieses Abziehen praktisch keine Veränderung der Reaktionsbedingungen im Reaktionsgefäß 2 statt; deshalb hat auch das abgezogene Ammoniumuranylplutonylkarbonat stets gleichbleibende Qualität.

Wird der Anlage durch die Rohrleitung 27 anstelle von Uranylplutonylnitrat z.B. eine wässrige Lösung von Uranylnitrat oder gasförmiges Uranhexafluorid zugeführt, gelangt als behandeltes Schüttgut s' pulverförmiges Uranoxid in den Sammelbehälter 33.

**Ansprüche**

1. Verfahren zum Behandeln von festem Schüttgut aus einer Schwermetallverbindung, insbesondere aus einer Uran-, Plutonium- und/oder Thoriumverbindung, mit einem Prozeßgas (p1, p2) in einem Behandlungsgefäß (16),
**dadurch gekennzeichnet,**
daß als Behandlungsgefäß (16) ein Rohr mit übereinander angeordneten, jeweils ein Überlaufrohr (18) aufweisenden Siebböden (17) und mit einem Zufuhrstutzen (20) am Unterende des Rohres verwendet wird,
daß das Schüttgut (s) am Oberende in das Rohr eingefüllt und das Prozeßgas (p1) in den Zufuhrstutzen (20) eingeblasen wird, und
daß das behandelte Schüttgut (s) durch ein Austragsrohr (32) am Unterende des Rohres abgezogen wird.

2. Verfahren nach Anspruch 1,
**dadurch gekennzeichnet,**
daß an einem Austrittsstutzen (21) am Oberende des Rohres austretendes Abgas (a) über einen Zyklonabscheider (22) geleitet wird, und
daß das im Zyklonabscheider (22) abgeschiedene Schüttgut über ein Austragsrohr (23) in das Rohr an dessen Oberende zurückgeführt wird.

3. Verfahren nach Anspruch 1 oder 2,
**dadurch gekennzeichnet,**
daß durch einen weiteren Zufuhrstutzen (34), der sich am Rohr mit Abstand von dessen Ober- und Unterende befindet, weiteres Prozeßgas (p2) in das Rohr geblasen wird.

4. Verfahren nach Anspruch 1, 2 oder 3,
**dadurch gekennzeichnet,**
daß auf einem der Siebböden (17) befindliches Schüttgut (35) mit einer am Rohr angebrachten Heizvorrichtung (30) beheizt wird.

5. Verfahren nach einem der Ansprüche 1 bis 4,
**dadurch gekennzeichnet,**
daß auf einem der Siebböden (17) befindliches Schüttgut (35) mit einer am Rohr angebrachten Kühlvorrichtung (31) gekühlt wird.

6. Verfahren nach einem der Ansprüche 2 bis 5,
**dadurch gekennzeichnet,**
daß das aus dem Austrittsstutzen (21) am Oberende des Rohres abgezogene Abgas (a) in ein Reaktionsgefäß (2) zum Ausfällen der Schwermetallverbindung aus einer wässrigen Lösung des Schwermetalls geleitet wird.

7. Verfahren nach Anspruch 6,
**dadurch gekennzeichnet,**
daß die ausgefällte Schwermetallverbindung aus dem Reaktionsgefäß (2) abgezogen, in einer Zentrifuge (10) abgeschieden und als Schüttgut (s) in das Rohr über einen Einförderstutzen (15) an dessen Oberende eingebracht wird.

8. Verfahren nach Anspruch 7,
**dadurch gekennzeichnet,**
daß eine vom Reaktionsgefäß (2) zur Zentrifuge (10) geführte Rohrleitung (8) für die ausgefällte Schwermetallverbindung benutzt wird, wobei die Rohrleitung (8) in einem Steigleitungsteil (11) vom Boden des Reaktionsgefäßes (2) zur Zentrifuge (10) wendelförmig aufsteigt.

9. Verfahren nach Anspruch 7 oder 8,
**dadurch gekennzeichnet,**
daß die Schwermetallverbindung mit einem Vibrationsdosierer (14) von der Zentrifuge (10) zu dem Einförderstutzen (15) am Oberende des Rohres gefördert wird.

10. Verfahren nach einem der Ansprüche 1 bis 9,
**dadurch gekennzeichnet,**
daß als Schwermetallverbindung Ammoniumcarbonat von Uran, Plutonium und/oder Thorium verwendet wird.

11. Verfahren nach Anspruch 10,
**dadurch gekennzeichnet,**
daß als Schwermetallverbindung Ammoniumuranylcarbonat $[(NH_4)_4(UO_2)(CO_3)_3]$ und/oder Ammoniumuranylplutonylcarbonat $[(NH_4)_4(U/PuO_2)(CO_3)_3]$ verwendet wird.

12. Verfahren nach Anspruch 10 oder 11,
**dadurch gekennzeichnet,**
daß als erstes Prozeßgas (p1) in den Zufuhrstutzen (20) am Unterende des Rohres ein Gemisch aus Sauerstoff und Stickstoff eingeblasen wird.

13. Verfahren nach Anspruch 3 oder folgenden und Anspruch 10 oder folgenden,

**dadurch gekennzeichnet,**

daß der Abstand des weiten Zufuhrstutzens (34) vom Unterende des Rohres kleiner ist als vom Oberende und daß als weiteres Prozeßgas (p2) durch den weiteren Zufuhrstutzen (34) ein Gemisch aus Stickstoff und Wasserstoff in das Rohr geblasen wird.

14. Verfahren nach Anspruch 3 oder folgenden und Anspruch 10 oder folgenden,

**dadurch gekennzeichnet,**

daß der Abstand des weiten Zufuhrrohres vom Unterende des Rohres größer ist als vom Oberende, und daß als weiteres Prozeßgas durch den weiteren Zufuhrstutzen Wasserdampf in das Rohr geblasen wird.

15. Verfahren nach Anspruch 6 oder folgenden und Anspruch 11 oder folgenden,,

**dadurch gekennzeichnet,**

daß die wässrige Lösung im Reaktionsgefäß (2) durch Einleiten einer wässrigen Lösung von Uranylnitrat [$UO_2(NO_3)_2$] und/oder Uranylplutonylnitrat [$U/PuO_2(NO_3)_2$] sowie von $CO_2$ und $NH_3$ in dieses Reaktionsgefäß (2) erzeugt wird.

16. Verfahren nach Anspruch 6 oder folgenden und Anspruch 11 oder folgenden,

**dadurch gekennzeichnet,**

daß die wässrige Lösung im Reaktionsgefäß (2) durch Einleiten von Wasser, $UF_6$ sowie von $CO_2$ und $NH_3$ in dieses Reaktionsgefäß (2) erzeugt wird.

17. Verfahren nach Anspruch 7 und 15,

**dadurch gekennzeichnet,**

daß die Zufuhr der wässrigen Lösung von Uranylnitrat und/oder Uranylplutonylnitrat in das Reaktionsgefäß (2) während des Abziehens der ausgefällten Schwermetallverbindung unterbrochen wird.

18. Verfahren nach Anspruch 7 und 16,

**dadurch gekennzeichnet,**

daß die Zufuhr von Wasser und $UF_6$ in das Reaktionsgefäß (2) während des Abziehens der ausgefällten Schwermetallverbindung unterbrochen wird.

19. Behandlungsgefäß (16) zur Behandlung von festem Schüttgut (s), das aus einer Uran-, Plutonium- und/oder Thoriumverbindung besteht, mit

a) einem Rohr mit übereinander angeordneten, jeweils ein Überlaufrohr (18) aufweisenden Siebböden (17),

b) mit einem Einförderstutzen (15) zur Zufuhr des festen Schüttgutes (s) am Oberende des Rohres,

c) mit einem Zufuhrstutzen (20) zur Zufuhr eines Prozeßgases (p1) am Unterende des Rohres,

d) mit einem Austragsrohr (32) zum Austragen des behandelten Schüttgutes (s') am Unterende des Rohres,

e) mit einem Austrittsstutzen (21) für den Austritt von Abgas (a) am Oberende des Rohres,

f) mit einem Anschluß für ein von einem Zyklonabscheider (22) ausgehendes Staubaustragsrohr (23) am Oberende des Rohres,

g) mit einem weiteren Zufuhrstutzen (34) für ein weiteres Prozeßgas (p2), welcher weitere Zufuhrstutzen (34) sich am Rohr mit Abstand von dessen Ober- und Unterende befindet,

h) mit mindestens einer Heizvorrichtung (30) an einem der oberen Siebböden (17) und

i) mit mindestens einer Kühlvorrichtung (31) an einem der unteren Siebböden (17),

j) mit einem am Einförderstutzen (15) angeschlossenen Vibrationsdosierer (14),

k) mit einem am Austragsrohr (32) angeschlossenen Sammelbehälter (33).

20. Behandlungsgefäß nach Anspruch 19,

**dadurch gekennzeichnet,**

daß der Abstand des Zufuhrstutzens (34) vom Oberende des Rohres größer ist als vom Unterende.

21. Behandlungsgefäß (16) nach Anspruch 19 oder 20 mit

a) an einer Quelle für ein Gemisch aus Sauerstoff und Stickstoff angeschlossene Zufuhrstutzen (20),

b) an einer Quelle für Wasserstoff angeschlossenem weiteren Zufuhrstutzen (34),

c) an dem Zyklonabscheider (22) angeschlossenem Austrittsstutzen (21).

87 P 6404 E

FIG 1

87 P 6404 E

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 506 111 (ASEA-ATOM) * Zusammenfassung; Seite 3, Zeilen 14-19; Seite 3, Zeile 29 - Seite 4, Zeile 5; Seite 6, Zeile 4 - Seite 8, Zeile 20; Figur 1 * --- | 1,10,11 ,16 | C 01 G 56/00 C 01 G 43/00 C 01 F 15/00 B 01 J 8/18 |
| D,A | US-A-2 707 701 (C.E. HEMMINGER) * Spalte 1, Zeilen 16-28; Spalte 1, Zeile 42 - Spalte 4, Zeile 12; Spalte 5, Zeilen 45-60; Figuren 1,4 * --- | 1-5,19 | |
| A | AMERICAN CERAMIC SOCIETY BULLETIN, Band 63, Nr. 8, August 1984, Seiten 1051-1053,1061, Columbus, Ohio, US; H. ROEPENACK et al.: "Experience with the ammonium uranyl plutonyl carbonate coconversion process for mixed-oxide fuel fabrication" * Seite 1051, Spalte 2, Absatz 4 - Seite 1052, Spalte 2, Absatz 2; Figur 2 * ----- | 1,10,11 | |

RECHERCHIERTE SACHGEBIETE (Int. Cl.4)

B 01 J
C 01 G

Der vorliegende Recherchenbericht wurde für alle Patentansprüche erstellt

| Recherchenort | Abschlußdatum der Recherche | Prüfer |
|---|---|---|
| DEN HAAG | 16-12-1988 | SIEM T.D. |